# EUROPÄISCHE PATENTSCHRIFT

(11) **EP 0 460 654 B1**
(45) Veröffentlichungstag und Bekanntmachung des Hinweises auf die Patenterteilung: **26.04.1995**
(21) Anmeldenummer: 91109261.7
(22) Anmeldetag: 05.06.1991
(51) Int. Cl.: B29C 37/04, B23C 3/12, B25B 5/14

(54) **Vorrichtung zum Bearbeiten von Fensterrahmen o. dgl.**
Apparatus for the finishing on window frames or the like
Dispositif pour la finition de châssis de fenêtres ou similaires

(30) Priorität: 07.06.1990 DE 4018290
(43) Veröffentlichungstag der Anmeldung: 11.12.1991
(73) Patentinhaber: Eisenbach, Bernd, D-65611 Brechen (DE)
(72) Erfinder: Eisenbach, Bernd, D-65611 Brechen (DE)
(74) Vertreter: Müller, Eckhard, Dr.

(56) Entgegenhaltungen:
- DE-A- 2 806 262
- DE-A- 3 020 739
- DE-A- 3 103 220
- DE-A- 3 727 136
- DE-U- 8 630 317
- DE-U- 9 016 150

## Beschreibung

Die Erfindung bezieht sich auf eine Vorrichtung zum Bearbeiten der Eckverbindungen von aus Profilstücken geschweißten Rahmen, wie bspw. Fenster- oder Türrahmen gemäß dem Oberbegriff des Anspruches 1.

Eine Vorrichtung mit den im Oberbegriff von Anspruch 1 definierten Merkmalen ist aus DE-A-31 03 220 bekannt.

Vorrichtungen für aus Kunststoffprofilen geschweißten Rahmen, Fensterrahmen, Türrahmen o. dgl. dienen dazu, die beim Schweißen der Profile an den Schweißnähten der Eckbereiche entstandenen, nach außen ragenden Schweißraupen abzutragen und ggf. Dichtungsnuten o. dgl. Konturen freizulegen. Eine wesentliche Forderung an derartige Maschinen ist ein möglichst automatisierter Betrieb. Zur Bearbeitung von handelsüblichen Profilen, welche sich zumindest innerhalb einer Serie lediglich in Breite und demgemäß in der Lage des die Dichtungsnut ausweisenden Überschlages unterscheiden, ist bereits in der DE-PS 33 29 765 eine Vorrichtung zum Verputzen des Innenecks aus geschweißten Profilstäben vorgeschlagen, bei welcher der Rahmen in einer Aufspanneinrichtung gehalten ist und wobei ein diagonal zum Rahmeneck verfahrbarer Horizontalschlitten und ein senkrecht dazu verfahrbarer Vertikalschlitten jeweils mindestens einen am Rahmeneck anlegbaren Anschlag aufweist. Es wird also derart vorgegangen, daß zunächst der Rahmen an einer Anlage eingespannt und danach durch den verfahrbaren Anschlag das Bearbeitungswerkzeug in die exakte Ausgangsposition unabhängig von der Breite des jeweiligen Profils gebracht wird. Bei der aus der DE-OS 37 27 136 bekannten Vorrichtung soll die Einstellung der Werkzeuge auf unterschiedliche Profilbreiten durch einen feststehenden Innenanschlag und damit zusammenwirkenden in der Rahmenebene verfahrbaren Winkelplatten sowie senkrecht dazu beweglichen, Bearbeitungswerkzeuge aufnehmende Spannplatten unter Zuhilfenahme von zusätzlichen Positionieranschlägen erreicht werden. Bei den bekannten Maschinen gestaltet sich jedoch das Einziehen von Eckverbindungen mit unterschiedlicher Breite der Rahmenschenkel bzw. mit versetztgeschweißten Profilen im Hinblick auf eine genaue Positionierung bezüglich der Arbeitswerkzeuge äußerst schwierig. Bei der aus DE-OS 37 27 136 bekannten Vorrichtung mit feststehendem Innenanschlag und an der Außenseite der Rahmenschenkel zu liegen kommenden Winkelspannplatten ist eine exakte Positionierung überhaupt nicht möglich.

In der DE-A-31 03 220 ist eine Spanneinrichtung zum kraftschlüssigen Spannen von auf Gehrung geschnittener Kunststoff-Fensterprofile beschrieben, um diese durch Einspritzen von Kunststoffschmelzen miteinander zu verbinden. Dabei müssen die Gehrungsflächen der Rahmenteile so dicht aneinandergepreßt werden, daß die Kunststoffschmelze während ihres Einspritzens in die Verbindungshohlräume im Eckbereich trotz des hohen Drucks nicht über die Gehrungsfuge nach außen dringt. Hierfür weist die bekannte Spanneinrichtung zwei feste, in einem Winkel von 90° zueinander angeordnete Backen auf, an deren Anschlagfläche die Rahmenschenkel des Fensterrahmens zu liegen kommen. Gegen die Innenseiten der Rahmenschenkel ist ein mittels einer hydraulischen Kolben-Zylinder-Anordnung bewegbarer keilförmiger Spannbacken bewegbar, wodurch die Rahmenschenkel gegen die Anschlagflächen der Backen gepreßt werden. Auf der Außenseite des Rahmens greifen unmittelbar im Bereich der Eckverbindung kardanisch gelagerte Spannbacken unter so großer Kraft an den Rahmenschenkel an, daß die Gehrungsenden der Rahmenteile elastisch verformt werden, bis eine spaltfreie Gehrungsfuge erreicht ist. Alternativ ist bei der bekannten Spanneinrichtung bereits vorgesehen, daß die an den Außenseiten der Rahmenschenkel zu liegen kommenden Backen beweglich und der am Inneneck angreifende Spannbacken fest angeordnet ist.

Davon ausgehend liegt der Erfindung die Aufgabe zugrunde, eine Vorrichtung der eingangs genannten Art dahingehend weiterzuentwickeln, daß bei konstruktiv einfachem Aufbau und zuverlässigem Betrieb sowohl Eckverbindungen mit gleichen als auch ungleichen Profilbreiten der Rahmen zuverlässig aufgenommen sind bei gleichzeitig schneller und sicherer Positionierung der Berarbeitungseinheiten.

Diese Aufgabe wird gelöst durch die Vorrichtung nach Anspruch 1.

Die erfindungsgemäße Vorrichtung ermöglicht sowohl ein Bearbeiten von normalgeschweißten als auch versetztgeschweißten Profilen, wobei die Bearbeitungseinheiten jeweils exakt in Ausgangsposition gebracht werden, und zwar auch unabhängig von der jeweiligen Profilbreite bzw. der Lage des Überschlages. Sollen bspw. normalverschweißte Rahmen bearbeitet werden, drücken die an den Innenseiten der Rahmenschenkel angreifenden Anschlagmittel das Rahmeneck gegen die ortsfest an der Aufnahme angeordneten Gegenanschlagmittel. Da durch die Stellbewegung der Anschlagmittel in der Rahmenebene zugleich eine Verschiebung der Bearbeitungseinheiten für das Rahmeninneneck erfolgt, sind diese Werkzeuge bereits durch die Lage des Überschlages des Profiles auf die jeweilige Profilbreite unmittelbar in Arbeitsstellung positioniert. Zusätzlich kann ein, wie in der DE-PS 33 29 756 beschrieben, senkrecht zur Rahmenebene gegen den Überschlag verfahrbarer Anschlag vorgesehen sein, um auch senkrecht zur Rahmenebene eine exakte Positionierung der Bearbeitungseinheiten zu erreichen. Ist dagegen ein Rahmen mit versetztgeschweißten Profilen eingelegt, werden die Anschlagmittel in einer Stellung angehalten, wobei die bspw. an der Aufnahme angeordneten Schubmittel das Rahmeneck gegen die nun feststehenden Anschlagmittel drücken. Hierdurch ist sichergestellt, daß auch dieses Rahmeneck, ohne zu verkanten, in die Aufnahme eingezogen und die Rahmenschenkel bezüglich einer Mitte-Längsachse der Anschlagmittel ausgerichtet anliegen, wodurch auch insoweit eine exakte Positionierung in der Aufnahme erreicht ist. Da sich in dieser Betriebsart die Anschlagmittel in einer Haltestellung befinden, sind auch die zusammen mit den Anschlagmitteln verfahrbaren Arbeitseinheiten bereits in exakt eingestellter Arbeitsposition, um nunmehr die erforderlichen Bearbeitungsvorgänge auszuführen.

In einer ersten besonderen Ausführungsform der Erfindung ist es vorgesehen, daß die Anschlagmittel als Werkzeugträger zumindest für Bearbeitungseinheiten des Rahmeninnenecks ausgebildet sind, wodurch sich eine besonders kompakte Baugröße ergibt.

Nach einer weiteren Ausführungsform der Erfindung ist eine Erkennungseinrichtung vorgesehen, welche abhängig von der jeweiligen Eckverbindung, normal- oder versetztgeschweißt, die Anschlagmittel zum Verfahren in Richtung der Gegenanschlagmittel oder unter Betätigen der Schubmittel in Haltestellung schaltet. Hierdurch ist ein weitestgehend automatisierter Betrieb erreicht, indem die Vorrichtung mittels der Erkennungseinrichtung selbsttätig die jeweilige Betriebsweise auswählt, so daß Fehlfunktionen ausgeschlossen sind.

In einer Ausgestaltung dieses Erfindungsgedankens ist die Erkennungseinrichtung mit die Breite beider Rahmenschenkel detektierenden, vorzugsweise als Kontaktschalter ausgebildeten, Sensoren versehen. Ist ein normalgeschweißtes Rahmeneck mit gleich breiten Rahmenschenkeln eingelegt, werden beide Kontaktschalter betätigt. Erst in dieser Kennung sind die Anschlagmittel verfahrbar und drücken das Rahmeneck mit seinen Auflenseiten gegen die Gegenanschlagmittel. Ist dagegen ein versetztgeschweißtes Profil eingelegt und daher in der Ausgangsposition des Profils in der Aufnahme mit lediglich einem an den Gegenanschlagmitteln anliegenden Rahmenschenkel ensprechend nur einer der beiden Kontaktschalter betätigt, so werden die Anschlagmittel in Haltestellung geschaltet, wogegen nunmehr die Schubmittel das Rahmeneck gegen die in dieser Betriebsart als Innenanschlag wirkenden Anschlagmittel schieben.

Eine weitere Automatisierung der Vorrichtung läßt sich erfindungsgemäß dadurch realisieren, daß die Anschlagmittel einen an beiden Rahmenschenkeln zugleich anlegbaren Anschlagkörper aufweisen mit zumindest einem einem der beiden Rahmenschenkel zugeordneten Kontaktelement, welches in Anlagestellung des jeweiligen Rahmenschenkels die Vorschubbewegung der Schubmittel begrenzt. Auch ist hierdurch eine Beschleunigung des Arbeitsablaufes erreicht.

In gleicher Weise kann nach der Erfindung mindestens ein die Vorschubbewegung der Anschlagmittel in Anlagestellung der jeweiligen Eckverbindung an den Gegenanschlagmitteln begrenzendes Schaltmittel vorgesehen sein.

Vorzugsweise sind jedoch zwei mit der Außenseite jeweils eines der beiden Rahmenschenkel bei Anlage an den Gegenanschlagmitteln in Wirkstellung tretende Schaltmittel vorgesehen, wodurch in jedem Falle eine exakte Positionierung des Rahmenecks in der Aufnahme sichergestellt ist.

Dabei können in besonders vorteilhafter Weise die für die Erkennungungseinrichtung vorgesehenen Kontaktschalter gleichzeitig die Schaltmittel für die Vorschubbegrenzung der Anschlagmittel bilden, was eine erhebliche konstruktive und schaltungstechnische Vereinfachung darstellt.

In einer wiederum anderen Ausgestaltung der Erfindung ist ein in Haltestellung der Anschlagmittel in Wirkstellung tretendes Schaltelement vorgesehen zum Ansteuern der Bearbeitungseinheiten unter Einbeziehung der Funktionen der Sensoren bzw. Kontaktschalter und vorzugsweise mindestens eines der Kontaktelemente. Hierdurch ist ohne großen elektronischen Aufwand eine einfache und zuverlässige Steuerung für die Bearbeitungseinheiten erreicht. Ist bspw. ein normalgeschweißtes Rahmeneck eingelegt, so sind beide mit der Außenseite des jeweiligen Rahmenschenkels in Eingriff stehenden Kontaktschalter betätigt, wobei das lediglich in Haltestellung der Anschlagmittel in Wirkstellung tretende Schaltelement unbetätigt ist. Bei betätigtem Kontaktelement, d. h. an den den Anschlagmitteln anliegendem Rahmeneck, erfolgt mit dieser Kennung die Ansteuerung der Bearbeitungseinheiten. Dagegen werden die Werkzeuge bei einem versetztgeschweißten Rahmenprofil erst angesteuert, wenn bei außer Eingriff mit den Außenseiten der Rahmenschenkel stehenden Kontaktschaltern und betätigem Kontaktelement das Schaltelement bei in Haltestellung befindlichen Anschlagmitteln betätigt ist.

Vorteilhafterweise sind die Schubmittel als, vorzugsweise druckmittelbetätigbare, Kolben-Zylinder-Einheiten ausgebildet mit jeweils schräg bezüglich der Bewegungsrichtung der Anschlagmittel angeordneten Schubstangen. Die vorgeschlagene Anordnung der Kolben-Zylinder-Einheiten bzw. ihrer Schubstangen gewährleistet ein gleichmäßiges Verschieben und Andrücken der versetztgeschweißten Rahmenprofile gegen die Anschlagmittel, was sich besonders günstig auf die exakte Positionierung des Rahmenecks in der Aufnahme auswirkt.

Konstruktiv besonders einfach ist es, wenn die Gegenanschlagmittel als Bolzen, Schienen o. dgl. Einrichtungen ausgebildet sind.

Um ein einfaches Einlegen der jeweiligen Rahmen zu ermöglichen, ist es nach einem Vorschlag der Erfindung vorgesehen, daß die Anschlagmittel bzw. der Anschlagkörper absenkbar und anhebbar ausgebildet sind.

Schließlich ist es nach der Erfindung auch vorgesehen, daß die Vorrichtung einen in der Rahmenebene und senkrecht dazu an einem Grundgestell verfahrbaren, i. w. U-förmigen Kreuzschlitten aufweist mit die Eckverbindung seitlich übergreifenden Schenkeln und die Anschlagmittel an einem der beiden Schenkeln, vorzugsweise an dem unterhalb der Eckverbindung zu liegen kommenden Schenkel, gehalten sind, während der jeweils andere Schenkel ggf. zur Aufnahme mindestens einer, ggf. in der Rahmenebene verschiebbaren Bearbeitungseinheit ausgebildet ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen.

Es zeigen:
- Figur 1: einen Ausschnitt einer möglichen Ausführungsform einer erfindungsgemäßen Vorrichtung, im Querschnitt,
- Figur 2: eine schematische Darstellung des Bewegungsablaufes bei einer möglichen Ausführungsform nach der Erfindung für ein normalgeschweißtes Rahmenprofil und
- Figur 3: eine Darstellung entsprechend Figur 2, jedoch für ein versetztgeschweißtes Profil.

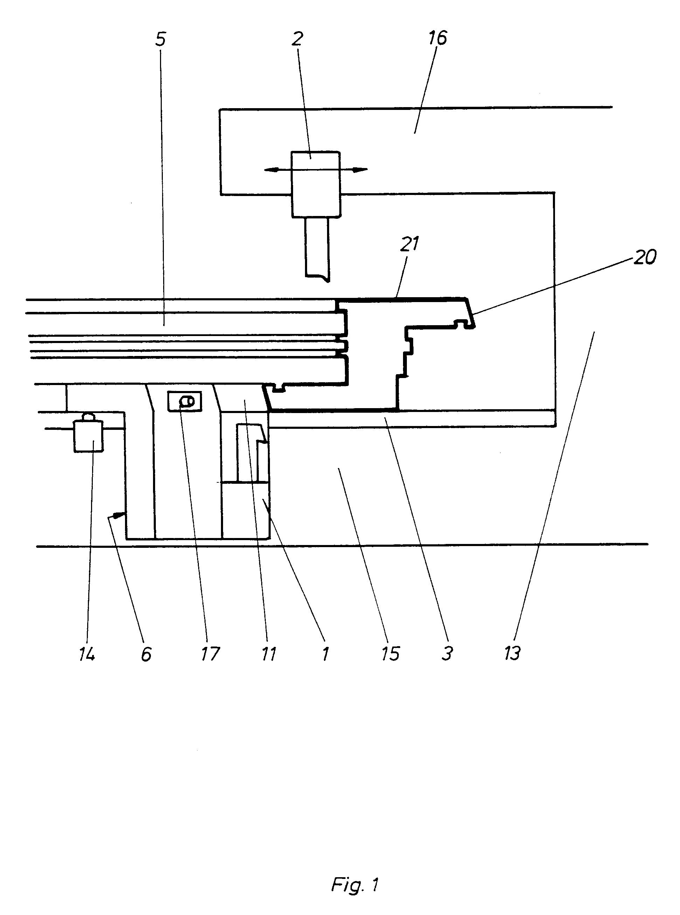

Die Vorrichtung gemäß Figur 1 weist eine Aufnahme 3 auf, auf welcher der zu bearbeitende Rahmen, bspw. ein Fenster- oder Türrahmen zu liegen kommt. Der Rahmen besteht aus an den Ecken verschweißten, zuvor auf Gehrung geschnittenen Kunststoffprofilen. Die Ebene der zu bearbeitenden Schweißnaht verläuft unter einem Winkel von 45° zu den benachbarten, miteinander verbundenen Rahmenschenkeln. Bei der hier gewählten Darstellung ist jeweils nur ein Rahmeneck mit Rahmenschenkeln 4 und 5 zu erkennen.

Die Bearbeitung der Eckverbindungen erfolgt mittels Fräß-, Abstech- oder bspw. Bohrwerkzeuge aufweisenden Bearbeitungseinheiten, wovon zur Vereinfachung nur zwei Bearbeitungseinheiten 1 und 2 dargestellt sind. Um die Bearbeitungseinheiten 1, 2 in Arbeitsposition an dem Rahmeneck zu bringen, müssen diese horizontal und vertikal in Richtung der Rahmenebene und senkrecht dazu verfahrbar sein.

Hierzu ist ein in einem (nicht dargestellten) Maschinengestell in vertikaler und horizontaler Richtung verschiebbarer Kreuzschlitten 13 vorgesehen, dessen Bewegung mittels (ebenfalls nicht dargestellten) Schubantrieben, wie Schritt- oder Spindelmotoren oder bspw. druckmittelbetätigten Kolben-Zylinder-Einheiten, erfolgt. Der Kreuzschlitten 13 ist i. w. U-förmig ausgebildet mit zwei die in der Aufnahme 3 jeweils eingelegte Eckverbindung seitlich übergreifenden Schenkeln 15 und 16. An dem oberhalb des Rahmenecks sich erstreckenden Schenkel 16 ist eine mit einer Abstecheinrichtung versehene Bearbeitungseinheit 2 aufgenommen, welche bspw. zum Abtragen der am Rahmeninneneck bis etwa zum Überschlag 20 vorstehenden Schweißraupe dienen kann und welche vorzugsweise ihrerseits längsverschieblich an dem Schenkel 16 des Kreuzschlittens 13 verfahrbar ist.

Am freien Ende des unterhalb des Rahmenecks sich erstreckenden Schenkels 15 des Kreuzschlittens 13 sind Anschlagmittel 6 angeordnet, an welchen ihrerseits die Bearbeitungseinheit 1 zum Verputzen des Rahmeninnenecks im Bereich des Überschlages 20 des Profiles aufgenommen ist. Die Anschlagmittel 6 und die Bearbeitungseinheiten 1, 2 sind damit zusammen mit dem Kreuzschlitten 13 verfahrbar.

Das Werkzeug der Bearbeitungseinheiten 1 und 2 ist bei der gewählten Ausführungsform in vertikaler Richtung mittels eines (nicht dargestellten) Schubantriebes ausfahrbar.

Selbstverständlich ist es möglich, weitere oder andere Bearbeitungseinheiten an den Schenkeln 15, 16 bzw. an den die Anschlagmitteln 6 bildenden Bauten vorzusehen, um bspw. eine Fräßbearbeitung an der Schweißstelle im Bereich einer Dichtungsnut an einem Überschlag 20 des jeweiligen Rahmenecks oder an den beiden Sichtflächen vorzunehmen. Auch sollte die Maschine ein oder mehrere (nicht dargestellte) Profilfräsersätze oder einen scheibenförmigen Konturfräser zur Bearbeitung der Außenseiten des jeweiligen Rahmenecks aufweisen.

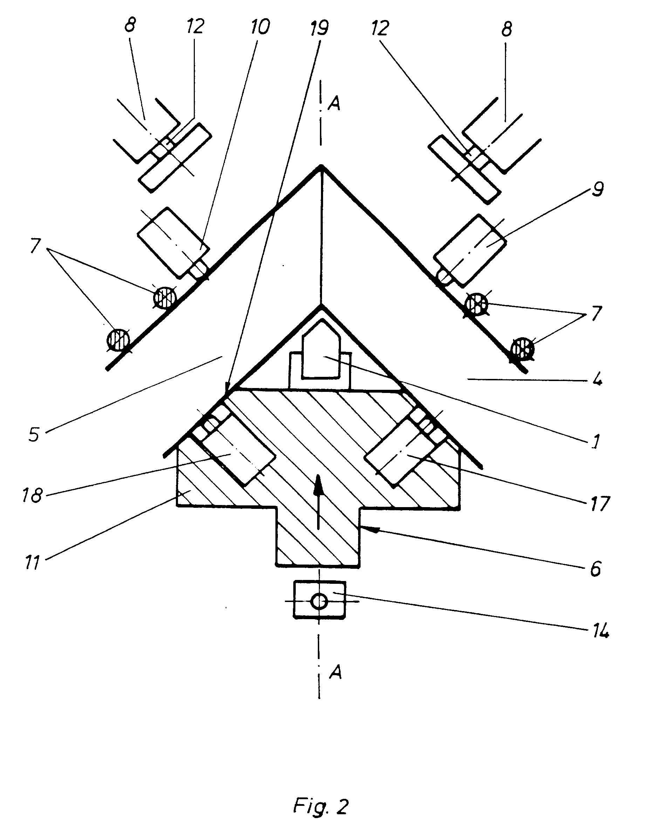

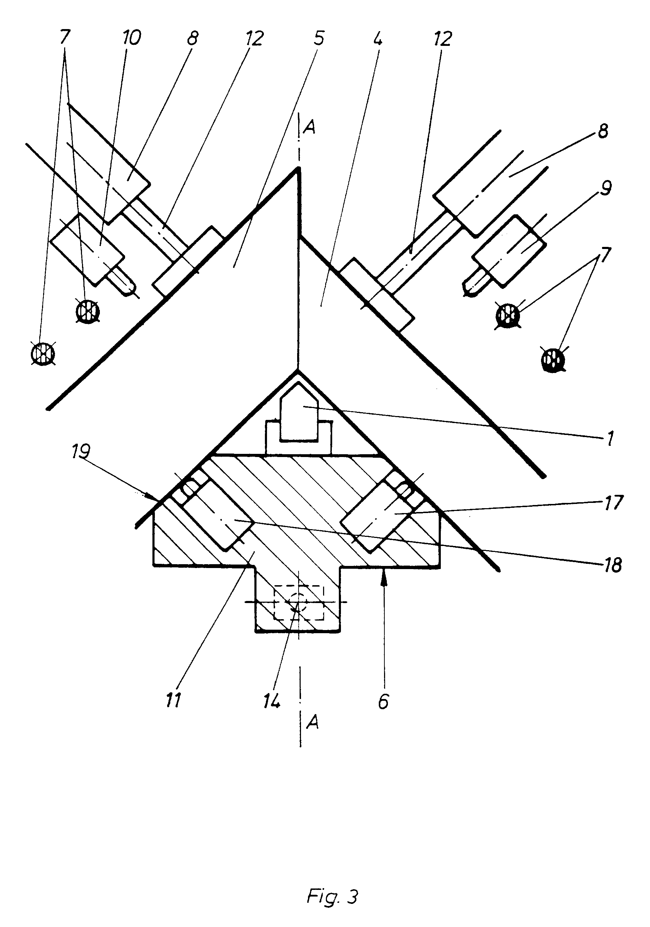

Die Anschlagsmittel 6 weisen einen Anschlagskörper 11 auf, welcher, wie besonders den Figuren 2 und 3 zu entnehmen, mit seinen unter einem Winkel von 45° bezüglich einer Mitte-Längsachse A-A verlaufenden Backen 19 zumindest bereichsweise an der Innenseite beider Rahmenschenkeln 4, 5 zur Anlage gelangt.

An der Aufnahme 3 sind ortsfeste Gegenanschlagmittel 7 vorgesehen, welche als Widerlager für das Rahmenaußeneck mit den Anschlagmitteln 6 in einer weiter unten beschriebenen Betriebsart der Vorrichtung zur Bearbeitung von Rahmenprofilen mit gleicher Breite der Rahmenschenkel 4, 5 bzw. normalgeschweißten Profilen gemäß Figur 2 zusammenwirken. Die Gegenanschlagmittel 7 können etwa als ggf. ab- und anhebbare, beiden Rahmenschenkeln zugeordnete Bolzen ausgeführt sein.

Weiterhin sind an der Aufnahme 3 als, bspw. pneumatisch betätigte, Kolben-Zylinder-Einheiten ausgebildete Schubmittel 8 angeordnet, welche in einer zweiten Betriebsart der Vorrichtung zur Bearbeitung von versetztgeschweißten Profilen, wie in Figur 3 dargestellt, zum Andrücken des Rahmenecks gegen die nunmehr in einer Stellung gehaltenen und dann als Innenanschlag wirkenden Anschlagmittel 6 dienen. Bei dem Ausführungsbeispiel greift an der Außenseite jedes Rahmenschenkels 4, 5 eine Kolben-Zylinder-Einheit an, welche jeweils schräg bezüglich der Mitte-Längsachse A-A in einer Ebene parallel zur Rahmenebene angeordnet sind mit entsprechender Ausrichtung ihrer Schubstangen 12, so daß ein gleichmäßiges und kippmomentfreies Verschieben eines versetztgeschweißten Rahmenecks gegen die in Haltestellung befindlichen Anschlagmittel 6 gewährleistet ist.

Schließlich sind an der Aufnahme 3 etwa in der Ebene der Gegenanschlagmittel 7 angeordnete, ggf. ebenfalls elektrisch ausgebildete, Kontaktschalter 9 und 10 vorgesehen, welche dazu ausgebildet sind, unter Detektierung der Breite des jeweiligen Rahmenschenkels 4, 5 festzustellen, ob das eingelegte Rahmeneck normal- oder versetztgeschweißt ist, und ein Schaltsignal zum Verfahren der Anschlagmittel 6 in Richtung der Gegenanschlagmittel 7 oder, im Falle von versetzt geschweißten Profilen, ein Signal zum Anhalten der Anschlagmittel 6 in einer Stellung und zum Betätigen der Vorschubmittel 8 zu erzeugen. Ist etwa, wie in Figur 2 gezeigt, ein normalgeschweißtes Rahmeneck mit gleich breiten Rahmenschenkeln 4, 5 eingelegt, werden beide Kontaktschalter 9 und 10 betätigt. Erst in dieser Kennung sind die Anschlagmittel 6 verfahrbar und drücken das Rahmeneck mit seinen Außenseiten gegen die Gegenanschlagmittel 7. Ist dagegen entsprechend Figur 3 ein versetztgeschweißtes Profil eingelegt, wobei in einer Ausgangsposition das Rahmeneck in der Aufnahme 3 nur mit einem Rahmenschenkel 5 an den Gegenanschlagmitteln 7 anliegt und daher nur einer der beiden Kontaktschalter 9, 10 betätigt ist, so werden die Anschlagmittel 6 in Haltestellung gehalten, woraufhin nunmehr die Schubmittel 8 das Rahmeneck gegen die in dieser Betriebsart als Innenanschlag wirkenden Anschlagmittel 6 schieben.

In den Anschlagkörper 11 ist gemäß den Figuren 2 und 3 auf jeder Backenseite ein bspw. elektrisches Kontaktelement 17 und 18 integriert, welche mit dem jeweiligen Rahmenschenkel 4, 5 in deren Anlagestellung an den Backen 19 des Anschlagkörpers 11 in Eingriff treten und im Falle, daß beide Kontaktelemente 17, 18 betätigt sind, die Vorschubbewegung der Schubmittel 8 in der Betriebsweise für versetztgeschweißte Rahmenprofile begrenzen. Die Begrenzung der Vorschubbewegung der Anschlagmittel 6 in der Betriebsart für normalgeschweißte Profile erfolgt gleichzeitig mittels den für die Profilerkennung vorgesehenen Kontaktschalter 9 und 10.

Nach dem Einziehvorgang befinden sich sowohl für normalgeschweißte Profile gemäß Figur 2 als auch im Falle versetztgeschweißter Profile gemäß Figur 3 die Bearbeitungseinheiten 1 und 2 jeweils exakt in Ausgangsposition, und zwar auch unabhängig von der jeweiligen Profilbreite bzw. der Lage des Überschlages 20 des Profiles. Bei einer durch die Antriebe des Kreuzschlittens 13 bewirkten Stellbewegung der Anschlagmittel 6 erfolgt zugleich eine Verschiebung der Bearbeitungseinheiten 1 und 2, wodurch diese Werkzeuge bereits durch die Lage des Überschlages 20 auf die jeweilige Breite eines Profiles innerhalb einer Profilserie unmittelbar in Arbeitsstellung positioniert sind. Soll eine andere Profilserie mit einer anderen Breite der Sichtfläche 21 bearbeitet werden, ist zuvor die Bearbeitungseinheit 2 durch eine Stellbewegung in Längsrichtung an dem Schenkel 16 entsprechend einzustellen, wobei diese Einstellung für die gesamte Profilserie unverändert bleibt. In der Betriebsart mit in Haltestellung befindlichen Anschlagmitteln 6 für versetztgeschweißte Profile befinden sich auch die mit den Anschlagmitteln 6 in zumindest in Rahmenebene gleichbleibender Lagebeziehung stehenden Bearbeitseinheiten 1, 2 bereits in exakt eingestellter Arbeitsposition, um nunmehr die erforderlichen Bearbeitungsvorgänge auszuführen.

Hierzu ist ein bei in Haltestellung befindlichen Anschlagmitteln 6 in Wirkstellung tretendes Schaltelement 14 vorgesehen, welches unter Einbeziehung der Funktionen der Kontaktschalter 9, 10 und der Kontaktelemente 17 und/oder 18 die Bearbeitungseinheiten 1, 2 ansteuert. Ist ein normalgeschweißtes Rahmeneck eingelegt, so sind beide mit der Außenseite des jeweiligen Rahmenschenkels 4, 5 in Eingriff stehenden Kontaktschalter 9, 10 betätigt, wobei das Schaltelement 14 unbetätigt ist. Bei betätigten Kontaktelementen 17 und/oder 18 erfolgt mit dieser Kennung die Ansteuerung der Bearbeitungseinheiten 1, 2. Dagegen werden die Werkzeuge bei einem versetztgeschweißten Rahmenprofil erst angesteuert, wenn bei außer Eingriff mit den Außenseiten der Rahmenschenkel 4, 5 stehenden Kontaktschaltern 9, 10 und betätigtem Kontaktelement 17 und/oder 18 das Schaltelement 14 bei in Haltestellung befindlichen Anschlagmitteln 6 betätigt ist.

Selbstverständlich ist es auch möglich eine CNC-Steuerung vorzusehen und den gesamten Arbeitsprozeß der Maschine programmgesteuert ablaufen zu lassen.

### Bezugszeichenliste

- 1: - Bearbeitungseinheit
- 2: - Bearbeitungseinheit
- 3: - Aufnahme
- 4: - Rahmenschenkel
- 5: - Rahmenschenkel
- 6: - Anschlagmittel
- 7: - Gegenanschlagmittel
- 8: - Schubmittel
- 9: - Kontaktschalter
- 10: - Kontaktschalter
- 11: - Anschlagkörper
- 12: - Schubstangen
- 13: - Kreuzschlitten
- 14: - Schaltelement
- 15: - Schenkel
- 16: - Schenkel
- 17: - Kontaktelemente
- 18: - Kontaktelemente
- 19: - Backen
- 20: - Überschlag
- 21: - Sichtfläche
- A-A:: Mitte-Längsachse

## Patentansprüche

1. Vorrichtung zum Bearbeiten der Eckverbindungen von aus Profilstücken geschweißten Rahmen, wie bspw. Fenster- oder Türrahmen, mit einer Aufnahme (3) für den aus mehreren Rahmenschenkeln gebildeten Rahmen, mit in der Rahmenebene verfahrbaren, wenigstens bereichsweise an der Innenseite der beiden Rahmenschenkel (4, 5) zu liegen kommenden Anschlagmitteln (6) und mit den Anschlagmitteln (6) zusammenwirkenden, auf der Außenseite der Rahmenschenkel (4, 5) anliegenden Gegenanschlagmitteln (7) sowie mit Schubmitteln (8) zum Andrücken der Eckverbindung gegen die Anschlagmittel (6), dadurch gekennzeichnet, daß in der Rahmenebene und senkrecht hierzu in die jeweilige Bearbeitungsposition an dem Rahmen, verfahrbare Bearbeitungseinheiten (1, 2) vorgesehen sind, wobei mindestens eine Bearbeitungseinheit zusammen mit den Anschlagmitteln (6) in der Rahmenebene verfahrbar ist, und daß die Schubmittel (8) für eine wahlweise Betätigung ausgebildet sind, derart, daß bei Eckverbindungen mit gleichen Breiten der Rahmenschenkel (4, 5) unter Stillsetzung der Schubmittel (8) die Anschlagmittel (6) mit den Gegenanschlagmitteln (7) zusammenwirken und bei Eckverbindungen mit unterschiedlichen Breiten der Rahmenschenkel (4, 5) bzw. versetzt geschweißten Rahmen die Schubmittel (8) die Eckverbindung gegen die in einer Stellung gehaltenen Anschlagmittel (6) pressen.

2. Vorrichtung nach Anspruch 1, dadurch gekennzeichnet, daß die Anschlagmittel (6) als Werkzeugträger zumindest für Bearbeitungseinheiten (1) des Rahmeninnenecks ausgebildet sind.

3. Vorrichtung nach Anspruch 1 oder 2, dadurch gekennzeichnet, daß eine Erkennungseinrichtung vorgesehen ist, welche abhängig von der jeweiligen Eckverbindung die Anschlagmittel (6) zum Verfahren in Richtung der Gegenanschlagmittel (7) oder unter Betätigen der Schubmittel (8) in Haltestellung schaltet.

4. Vorrichtung nach Anspruch 3, dadurch gekennzeichnet, daß die Erkennungseinrichtung mit die Breite beider Rahmenschenkel (4, 5) detektierenden, vorzugsweise als Kontaktschalter (9, 10 und ggf. 17 bzw. 18) ausgebildeten, Sensoren versehen ist.

5. Vorrichtung nach einem der Ansprüche 1 bis 4, dadurch gekennzeichnet, daß die Anschlagmittel (6) einen an beiden Rahmenschenkeln (4, 5) zugleich anlegbaren Anschlagkörper (11) aufweisen mit zumindest einem einem der beiden Rahmenschenkel (4, 5) zugeordneten Kontaktelement (17 bzw. 18), welches in Anlagestellung des jeweiligen Rahmenschenkels (4, 5) die Vorschubbewegung der Schubmittel (8) begrenzt.

6. Vorrichtung nach einem der Ansprüche 1 bis 5, dadurch gekennzeichnet, daß mindestens ein die Vorschubbewegung der Anschlagmittel (6) in Anlagestellung der jeweiligen Eckverbindung an den Gegenanschlagmitteln (7) begrenzendes Schaltmittel vorgesehen ist.

7. Vorrichtung nach Anspruch 6, dadurch gekennzeichnet, daß zwei mit der Außenseite jeweils eines der beiden Rahmenschenkel (4, 5) bei Anlage an den Gegenanschlagmitteln (7) in Wirkstellung tretende Schaltmittel vorgesehen sind.

8. Vorrichtung nach Anspruch 6 oder 7, dadurch gekennzeichnet, daß die Kontaktschalter (9, 10) der Erkennungseinrichtung gleichzeitig die Schaltmittel für die Vorschubbegrenzung der Anschlagmittel (6) bilden.

9. Vorrichtung nach einem der Ansprüche 4 bis 8, dadurch gekennzeichnet, daß ein in Haltestellung der Anschlagmittel (6) in Wirkstellung tretendes Schaltelement (14) vorgesehen ist zum Ansteuern der Bearbeitungsseinheiten (1, 2) unter Einbeziehung der Funktionen der Sensoren bzw. der Kontaktschalter (9, 10) und vorzugsweise mindestens eines der Kontaktelemente (17, 18).

10. Vorrichtung nach einem der Ansprüche 1 bis 9, dadurch gekennzeichnet, daß die Schubmittel (8) als, vorzugsweise druckmittelbetätigbare, Kolben-Zylinder-Einheiten ausgebildet sind mit jeweils schräg bezüglich der Bewegungsrichtung der Anschlagmittel (6) angeordneten Schubstangen (12).

11. Vorrichtung nach einem der Ansprüche 1 bis 10, dadurch gekennzeichnet, daß die Gegenanschlagmittel (7) als Bolzen, Schienen o. dgl. Einrichtungen ausgebildet sind.

12. Vorrichtung nach einem der Ansprüche 1 bis 11, dadurch gekennzeichnet, daß die Anschlagmittel (6) bzw. der Anschlagkörper (11) absenkbar und anhebbar ausgebildet sind.

13. Vorrichtung nach einem der Ansprüche 1 bis 12, dadurch gekennzeichnet, daß ein in der Rahmenebene und senkrecht dazu an einem Grundgestell verfahrbarer, i. w. U-förmiger Kreuzschlitten (13) vorgesehen ist mit die jeweilige Eckverbindung seitlich übergreifenden Schenkeln (15, 16) und daß die Anschlagmittel (6) an einem der beiden Schenkel (15, 16), vorzugsweise an dem unterhalb der Eckverbindung zu liegen kommenden Schenkel (15), gehalten sind, während der jeweils andere Schenkel (16) ggf. zur Aufanme mindestens einer, ggf. in der Rahmenebene verschieblichen Berarbeitungseinheit (2) ausgebildet ist.

## Claims

1. Device for the treatment of the corner connections of frames, such as for example window frames or door frames, welded together from profile members, with a receptacle (3) for the frame formed of several frame limbs, with abutment means (6), which are movable in the plane of the frame and come to lie against the inward side of both the frame limbs (4, 5) at least in regions thereof, and with counterabutment means (7), which co-operate with the abutment means (6) and lie against the outward side of the frame limbs (4, 5), as well as with thrust means (8) for urging the corner connection against the abutment means (6), characterised thereby, that treatment units (1, 2) are provided, which are movable in the plane of the frame and perpendicularly thereto into the respective treatment position at the frame, wherein at least one treatment unit is movable in the plane of the frame together with the abutment means (6), and that the thrust means (8) are constructed for a selectable actuation in such a manner that the abutment means (6) cooperate with the counterabutment means (7) whilst the thrust means (8) are at standstill for corner connections with equal widths of the frame limbs (4, 5) and the thrust means (8) urge the corner connection against the abutment means (6), which are kept in one setting, for corner connections with differing widths of the frame limbs (4, 5) or with frames welded together displaced in position.

2. Device according to claim 1, characterised thereby, that the abutment means (6) are constructed as tool carriers at least for treatment units (1) of the inward frame corner.

3. Device according to claim 1 or 2, characterised thereby, that a recognition equipment is provided, which in dependence on the respective corner connection switches the abutment means (6) to move in the direction of the counterabutment means (7) or into retained setting whilst actuating the thrust means (8).

4. Device according to claim 3, characterised thereby, that the recognition equipment is provided with sensors which detect the width of both the frame limbs (4, 5) and are preferably constructed as contact switches (9, 10 and in a given case 17 or 18).

5. Device according to one of the claims 1 to 4, characterised thereby, that the abutment means (6) display an abutment body (11), which is layable against both the frame limbs (4, 5) at the same time, with at least one contact element (17 or 18), which is associated with one of the two frame limbs (4, 5) and which in touching position of the respective one of the frame limbs (4, 5) limits the advancing movement of the thrust means (8).

6. Device according to one of the claims 1 to 5, characterised thereby, that at least one switching means is provided, which in touching position of the respective corner connection at the counterabutment means (7) limits the advancing movement of the abutment means (6).

7. Device according to claim 6, characterised thereby, that two switching means are provided, which come into operative setting with the outward side of a respective one of the two frame limbs (4, 5) on touching the counterabutment means (7).

8. Device according to claim 6 or 7, characterised thereby, that the contact switches (9, 10) of the recognition equipment at the same time form the switching means for limiting the advance of the abutment means (6).

9. Device according to one of the claims 4 to 8, characterised thereby, that a switching element (14) is provided, which comes into operative setting in the retained setting of the abutment means (6), for the drive control of the treatment units (1, 2) whilst including the functions of the sensors or the contact switches (9, 10) and preferably at least one of the contact elements (17, 18).

10. Device according to one of the claims 1 to 9, characterised thereby, that the thrust means (8) are constructed as piston-cylinder units, which are preferably actuable by pressure medium, with thrust rods (12) each arranged obliquely with respect to the direction of movement of the abutment means (6).

11. Device according to one of the claims 1 to 10, characterised thereby, that the counterabutment means (7) are constructed as pins, rails or the like equipments.

12. Device according to one of the claims 1 to 11, characterised thereby, that the abutment means (6) or the abutment body (11) are constructed to be raisable and lowerable.

13. Device according to one of the claims 1 to 12, characterised thereby, that a substantially U-shaped cross-slide (13) is provided, which is movable in the plane of the frame and perpendicularly thereto at a base frame and has limbs (15, 16) engaging laterally over the respective corner connection, and that the abutment means (6) are retained at one of both the limbs (15, 16), preferably at the limb (15) coming to lie underneath the corner connection, whilst the respective other limb (16) is in a given case constructed for the reception of at least one treatment unit (2), which is in a given case movable in the plane of the frame.

## Revendications

1. Dispositif destiné à l'usinage de raccords d'angle de châssis soudés constitués de tronçons de profilés, comme par exemple des châssis de fenêtre ou de porte, comportant : un logement (3) destiné au châssis constitué de plusieurs bras ; des organes de butée (6) qui sont mobiles dans le plan du châssis et qui, au moins localement, viennent s'appliquer contre la face interne des deux bras (4, 5) du châssis ; des organes de butée antagonistes (7) qui s'appliquent sur la face externe des bras (4, 5) et dont l'action se combine avec celle des organes de butée (6) ; ainsi que des organes de poussée (8) destinés à pousser le raccord d'angle contre l'organe de butée (6), caractérisé en ce qu'il est prévu, dans le plan du châssis et perpendiculairement à celui-ci, des dispositifs d'usinage (1, 2) qui peuvent être déplacés jusqu'à la position d'usinage courante contre le châssis, au moins un dispositif d'usinage pouvant être déplacé à l'intérieur du plan du châssis conjointement avec les organes de butée (6), et en ce que les organes de poussée (8) sont réalisés pour être appliqués à volonté de telle sorte que, pour des raccords d'angle ayant des bras (4, 5) de largeurs égales et en immobilisant les organes de poussée (8), les organes de butée (6) aient une action combinée avec les organes de butée antagonistes (7) et que, pour des raccords d'angle ayant des bras (4, 5) de largeurs différentes ou, selon le cas, des châssis soudés de manière décalée, les organes de poussée (8) poussent le raccord d'angle contre les organes de butée (6) maintenus dans une position.

2. Dispositif selon la revendication 1, caractérisé en ce que les organes de butée (6) sont réalisés sous la forme de porte-outil au moins pour des dispositifs d'usinage (1) de l'angle intérieur du châssis.

3. Dispositif selon les revendications 1 ou 2, caractérisé en ce qu'il est prévu un dispositif de reconnaissance qui, en fonction du raccord d'angle du moment, déplace les organes de butée (6) en direction des organes de butée antagonistes (7) ou les met en position d'arrêt moyennant l'actionnement des organes de poussée (8).

4. Dispositif selon la revendication 3, caractérisé en ce que le dispositif de reconnaissance est pourvu de capteurs qui détectent la largeur des deux bras (4, 5) et qui sont de préférence réalisés sous la forme d'interrupteurs par contact (9, 10) et, le cas échéant (17 ou 18).

5. Dispositif selon l'une des revendications 1 à 4, caractérisé en ce que les organes de butée (6) comportent un bloc de butée (11) pouvant être placé contre les deux bras (4, 5) et comportant au moins un élément de contact (17 ou 18) associé à l'un des deux bras (4, 5) et qui, lorsque le bras (4, 5) concerné est en position d'appui, limite l'avancement des organes de poussée (8).

6. Dispositif selon l'une des revendications 1 à 5, caractérisé en ce qu'il est prévu au moins un dispositif interrupteur limitant l'avance des organes de butée (6) lorsque le raccord d'angle est en position d'appui contre les organes de butée antagonistes (7).

7. Dispositif selon la revendication 6, caractérisé en ce qu'il est prévu deux dispositifs interrupteurs qui se mettent chacun en position de marche sous l'action de la face externe de l'un des deux bras (4, 5) lors du contact avec les organes de butée antagonistes (7).

8. Dispositif selon les revendications 6 ou 7, caractérisé en ce que les interrupteurs par contact (9, 10) du dispositif de reconnaissance constituent en même temps les dispositifs interrupteurs destinés à limiter l'avancement des organes de butée (6).

9. Dispositif selon l'une des revendications 4 à 8, caractérisé en ce qu'il est prévu un élément interrupteur (14) qui se met en position de marche lorsque les organes de butée (6) sont en position d'arrêt et qui est destiné à commander les dispositifs d'usinage (1, 2) en associant les fonctions des capteurs ou des interrupteurs par contact (9, 10) et de préférence d'au moins un des éléments de contact (17 ou 18).

10. Dispositif selon l'une des revendications 1 à 9, caractérisé en ce que les organes de poussée (8) sont réalisés sous la forme de vérins pouvant de préférence être actionnés au moyen d'un agent de pression et comportant des jambes de force (12), chacune disposée en biais par rapport à l'axe de déplacement des organes de butée (6).

11. Dispositif selon l'une des revendications 1 à 10, caractérisé en ce que les organes de butée antagonistes (7) sont réalisés sous la forme de goujons, de barres ou de dispositifs analogues.

12. Dispositif selon l'une des revendications 1 à 11, caractérisé en ce que les organes de butée (6), c'est-à-dire le bloc de butée (11), sont réalisés de façon à pouvoir s'abaisser et s'élever.

13. Dispositif selon l'une des revendications 1 à 12, caractérisé en ce qu'il est prévu un chariot à croix (13) sensiblement en forme de U, situé dans le plan du châssis et perpendiculairement à celui-ci, pouvant être déplacé sur un support de base et comportant des bras (15, 16) qui entourent latéralement le raccord d'angle, et en ce que les organes de butée (6) sont maintenus sur l'un des deux bras (15, 16), de préférence sur te bras (15) qui vient se placer sous le raccord d'angle, tandis que l'autre bras (16) est réalisé de façon à recevoir, le cas échéant, au moins un dispositif d'usinage (2) qui puisse éventuellement se déplacer dans le plan du châssis.
